# EUROPÄISCHE PATENTSCHRIFT

(11) **EP 1 312 823 B1**
(45) Veröffentlichungstag und Bekanntmachung des Hinweises auf die Patenterteilung: **06.10.2004**
(21) Anmeldenummer: 01126991.7
(22) Anmeldetag: 14.11.2001
(51) Int. Cl.: F16D 23/02, F16D 23/06

(54) **Synchronisiervorrichtung**
Synchromesh
Dispositif de synchronisation

(43) Veröffentlichungstag der Anmeldung: 21.05.2003
(73) Patentinhaber: Ford Global Technologies, Inc., A subsidiary of Ford Motor Company, Dearborn, Michigan 48126 (US)
(72) Erfinder: Schwerdtner, Michael, 50735 Köln (DE); Meurer, Juergen, 51519 Odenthal (DE); Mohr, Christian, 50859 Köln (DE)
(74) Vertreter: Drömer, Hans-Carsten, Dr.-Ing.

(56) Entgegenhaltungen:
- DE-A- 19 928 597
- FR-A- 1 385 860
- FR-A- 2 556 437
- PATENT ABSTRACTS OF JAPAN vol. 1995, no. 06, 31. Juli 1995 (1995-07-31) & JP 07 063250 A (AISIN EE I KK), 7. März 1995 (1995-03-07)

## Beschreibung

Die Erfindung bezieht sich auf eine Synchronisiervorrichtung der im Oberbegriff des Patentanspruchs 1 erläuterten Art.

Aus der DE 199 28 597 ist eine gattungsgemäße Synchronisiervorrichtung bekannt. Derartige Dreifachsynchronisierungen reagieren bei Erwärmung empfindlich auf Toleranzen in den Synchronringen. Eine Erwärmung tritt auf bei einer Fehlbedienung der Synchronisiervorrichtung, z. B. bei längerandauerndem Vorsynchronisieren durch den Fahrer, ohne die Synchronisiervorrichtung durchzuschalten. In einem solchen Fall kommen die Synchronringe leicht in Kontakt mit den Anlaufflächen des Zahnrades, wodurch die Synchronwirkung der Synchronisiervorrichtung stark eingeschränkt ist. Entsprechend müssen die Toleranzen der Synchronringe so ausgeführt sein, daß eine geringfügige Erwärmung nicht zur Fehlfunktion des mangelnden Synchronisierens führt. Diese Toleranzwahl führt andererseits dazu, daß die Synchronringpakete bei einer Fehlbedienung sehr stark erwärmen, was zur Zerstörung der Synchronringe führen kann.

Aufgabe der Erfindung ist es daher, die Gefahr der Zerstörung der Synchronisiervorrichtung durch eine Fehlbedienung, vor allem dem längerandauernden Vorsynchronisieren eines Ganges ohne Einrücken, zu vermeiden.

Gelöst wird diese Aufgabe mit den kennzeichnenden Merkmalen des Anspruches 1.

Indem die innere Konusfläche des inneren Synchronringes einen größeren Neigungswinkel aufweist als seine äußere Reibflächefläche, bildet die mit der inneren Konusfläche zusammenwirkende Konusfläche des zweiten Schaltungselementes eine konusförmige Hilfsrampe, die nur zum Teil die Funktion einer Reibfläche hat. Die wesentliche Funktion dieser Hilfsrampe ist die Herbeiführung des Zusammenbruchs der Sperrwirkung bei zu großer Erwärmung. Der auf alle Synchronringe wirkenden Andruck während des Synchronisierens bewirkt bei den Reibflächen mit flachem Neigungswinkel eine wesentlich höhere Flächenpressung als auf der Hilfsrampenfläche, was zu einer sehr unterschiedlichen Wärmeeintragung während der Synchronisierung führt:

Im Falle der Fehlbedienung erwärmt sich das ganze Synchronringpaket und dehnt sich - vor allem in Umfangsrichtung - stärker aus als die Hilfsrampe bzw. das zweite Schaltelement. Durch die größere Ausdehnung des Synchronringpaketes in Umfangsrichtung kommt es bei Erwärmung zu einer relativen axialen Verschiebung von Synchronringpaket und Hilfsrampe. Hätte die Hilfsrampenfläche den gleichen Neigungswinkel wie die anderen Reibflächen, käme es schon bei geringer Erwärmung, wie Sie im Normalbetrieb vorliegt, zu einem Zusammenbruch der Sperrwirkung der Synchronisiereinrichtung, da die Sperrverzahnung Kontakt mit der Schaltverzahnung bekommt. Durch die steilere Hilfsrampe wird dieser Zeitpunkt nach hinten hinausverschoben, so daß bei Normalbetrieb die volle Synchronisierfunktion aufrechterhalten bleibt.

Erst bei übermäßiger Erwärmung, hervorgerufen durch die Fehlbedienung des längerandauernden Vorsynchronisierens, kann der äußere Synchronring mit der Sperrverzahnung sich in Richtung des zweiten Schaltelementes bewegen, ohne daß vollständig synchronisiert wurde. Als Folge davon kommt die Verzahnung des ersten Schaltelementes und/oder die Sperrverzahnung des äußeren Synchronringes vorzeitig mit der Schaltverzahnung des zweiten Schaltelements in Kontakt, was zu einer starken Geräuschentwicklung führt und damit den Bediener der Synchroneinrichtung, in der Regel der Fahrer, es kann aber auch unbeabsichtigt der Beifahrer sein, warnt. Insofern erzeugt die konusförmige Hilfsrampe eine Fehlfunktion der Schaltvorrichtung, nämlich die besagte Geräuschentwicklung durch den vorzeitigen Kontakt der Schaltverzahnungen, was jedoch ein schlimmeres Versagen, nämlich die Zerstörung der Synchronringe, verhindert. Bei normaler Erwärmung jedoch, wie sie im Betrieb auftritt, bleibt die Synchronisierfunktion der Schaltvorrichtung vollständig erhalten, da bei gleichmäßiger Erwärmung von Synchronringen und Hilfsrampenfläche des zweiten Schaltungelementes kaum eine relative Verschiebung des Synchronringpaketes in Richtung des zweiten Schaltungselementes auftritt.

Eine vorteilhafte Ausgestaltung der Erfindung sieht vor, daß die zwischen innerer Konusfläche des inneren Synchronringes und der konusförmigen Hilfsrampe des zweiten Schaltungselementes gebildete Kontaktfläche als Gleitreibungsfläche ausgebildet ist, z. B. durch die geeignete Anordnung von Schmiemuten, Auflaufflächen usw., wobei diese Maßnahmen auf der Hilfsrampe und/oder auf der inneren Konusfläche erfolgen können.

Bei einer weiteren erfindungsgemäßen Ausführung ist der innere Synchronring im Umfang geteilt ist. Durch die unterschiedliche Erwärmung der Synchronringe und/oder bei der Verwendung verschiedener Materialien der Synchronringe und/oder anderer Schaltbauteile können zwischen den Synchronringen nichtbeabsichtigte Wärmespannungen auftreten, die zu ungleichmäßiger Reibbelastung der einzelnen Reibflächen führen können. Durch den geteilten inneren Synchronring können sich keine derartigen Wärmespannungen im Ringumfang aufbauen, so daß nur die Reibkräfte resultierend aus dem Betätigungs-Anpreßdruck der Synchronisiervorrichtung auf die Synchronringe wirken.

Bei einer weiteren vorteilhaften Ausführung sind die axialen Abstände von innerem und äußerem Synchronring zum zweiten Schaltungselement so gewählt, daß bei Erwärmung der Synchronisiereinrichtung der äußere Synchronring eher mit dem zweiten Schaltungselement in Berührung kommt als der innere Synchronring.

Weitere vorteilhafte Ausgestaltungen der Erfindung sind den Zeichnungen zu entnehmen. Es zeigt:

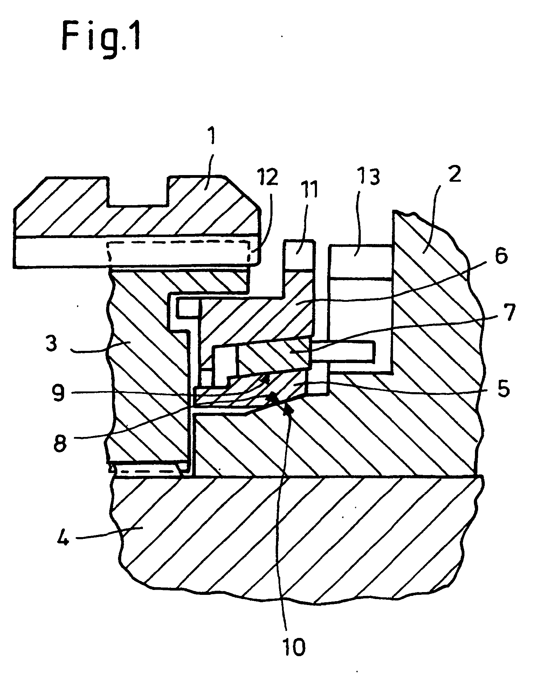

- Fig. 1: ein Querschnitt durch eine erfindungsgemäße Synchronvorrichtung.

Die in Figur 1 dargestellte erfindungsgemäße Synchronvorrichtung besteht aus einem ersten Schaltelement, hier als Schaltmuffe 1 ausgebildet, und einem zweiten Schaltelement, hier als zu schaltendes Gangzahnrad 2 ausgebildet. Die Schaltmuffe 1 ist über einen Synchronkörper 3 drehfest mit einer Welle 4 verbunden, während das Gangzahnrad 2 drehbeweglich auf der Welle 4 angeordnet ist. Das Synchronringpaket besteht aus einem inneren Synchronring 5 und einem äußeren Synchronring 6, die beide drehfest mit dem Synchronkörper 3 verbunden sind. Zwischen dem inneren Synchronring 5 und dem äußeren Synchronring 6 ist ein mittlerer Synchronring 7 angeordnet, der drehfest mit dem Gangzahnrad 2 verbunden ist.

Die innere Konusfläche 8 des inneren Synchronringes 5 weist einen größeren Neigungswinkel auf als die äußere Konusfläche 9 des inneren Synchronringes 5, sie wirkt mit einer konusförmigen Hilfsrampenfläche 10 des Gangzahnrades 2 zusammen. Die sich dort ergebende Kontaktfläche ist aufgrund der stärkeren Neigung während des Vorsynchronisierens nicht so starken Flächenpressungen unterworfen wie die Reibflächen zwischen den Synchronringen 5, 6 und 7. Demnach ist dort der Energieeintrag beim Vorsynchronisieren geringer, wodurch sich die Hilfsrampe 10 nur unwesentlich erwärmt, wohingegen das Synchronringpaket durch die verbleibenden, hochbelasteten Reibflächen einen wesentlich stärkeren Energieeintrag erfährt und bei längerandauemdem Vorsynchronisieren die Synchronringe 5, 6 und 7 sich dementsprechend wesentlich stärker erwärmen als die Hilfsrampe 10 bzw. das Gangzahnrad 2.

Bei übermäßiger Erwärmung des Synchronringpaketes verschieben sich die Synchronringe 5, 6 und 7 axial auf der Welle 4 in Richtung auf das Gangzahnrad 2, da sie infolge der Wärmeausdehnung ihren Durchmesser vergrößern und entsprechend auf der Hilfsrampenfläche 10 hinaufgieften. Ab einer bestimmten axialen Verschiebung kommt die Sperrverzahnung 11 des äußeren Synchronringes 6 und/oder die Schaltverzahnung der Schaltmuffe 12 mit der Schaltverzahnung 13 des Gangzahnrades 2 in Kontakt, was bei nicht vollständiger Synchronisierung bzw. bei unterschiedlichen Drehzahlen von Schaltmuffe 1 und Gangzahnrad 2 ein für den Bediener ungewohntes Geräusch hervorruft. Dieses Geräusch warnt den Bediener und zeigt ihm somit seine Fehlbedienung an.

Vorzugsweise beträgt der Neigungswinkel der Hilfsrampenfläche 10 zwischen 8° und 15°, während die Reibflächenflächen der Synchronringe 5, 6 und 7 einen Neigungswinkel von etwa 7° aufweisen. Damit ist gewährleistet, daß die Hilfsrampenfläche 10 einen wesentlich geringeren Energieeintrag gegenüber den Reibflächen der Synchronringe 5, 6 und 7 erfährt, andererseits ist jedoch noch genügend axiale Verschiebung des Synchronringpaketes bei Erwärmung desselben möglich.

## Patentansprüche

1. Synchronisiereinrichtung, insbesondere für ein Wechselgetriebe eines Kraftfahrzeuges, mit zumindest drei zusammenwirkenden, konische Reibflächen aufweisenden Synchronringen (5, 6, 7) zum Herstellen eines Gleichlaufs zwischen zwei miteinander formschlüssig in Verbindung zu bringenden Schaltungselementen (1, 2), wobei ein äußerer Synchronring (6) und ein innerer Synchronring (5) mit einem ersten Schaltelement (1) im wesentlichen drehfest verbunden sind, und ein mittlerer Synchronring (7) mit einem zweiten Schaltelement (2) im wesentlichen drehfest verbunden ist, und wobei der innere Synchronring (5) eine innere Konusfläche (8) aufweist, die mit dem zweiten Schaltelement (2) zusammenwirkt, und eine äußere Reibfläche (9), die mit der inneren Reibfläche des mittleren Synchronringes (7) zusammenwirkt, und wobei die äußere Reibfläche des mittleren Synchronringes (7) mit der inneren Reibfläche des äußeren Synchronringes (6) zusammenwirkt,
**dadurch gekennzeichnet, daß**
die innere Konusfläche (8) des inneren Synchronringes (5) einen größeren Neigungswinkel aufweist als seine äußere Reibfläche (9).

2. Synchronisiereinrichtung nach Anspruch 1,
**dadurch gekennzeichnet, daß**
die zwischen innerer Konusfläche (8) des inneren Synchronringes (5) und einer konusförmigen Hilfsrampenfläche (10) des zweiten Schaltungselementes (2) gebildete Kontaktfläche als Gleitreibungsfläche ausgebildet ist.

3. Synchronisiereinrichtung nach einem der vorherigen Ansprüche,
**dadurch gekennzeichnet, daß**
der mittlere Synchronring (7) aus einem Material mit überwiegendem Stahlanteil hergestellt ist.

4. Synchronisiereinrichtung nach einem der vorherigen Ansprüche,
**dadurch gekennzeichnet, daß**
der mittlere Synchronring (7) im Umfang geteilt ist.

5. Synchronisiereinrichtung nach einem der vorherigen Ansprüche,
**dadurch gekennzeichnet, daß**
die axialen Abstände von innerem Synchronring (5) und äußerem Synchronring (6) zum zweiten Schaltungselement (2) so gewählt sind, daß bei Erwärmung der Synchronisiereinrichtung der äußere Synchronring (6) eher mit dem zweiten Schaltungselement (6) in Berührung kommt als der innere Synchronring (5).

6. Synchronisiereinrichtung nach einem der vorherigen Ansprüche,
**dadurch gekennzeichnet, daß**
der Neigungswinkel der Hilfsrampenfläche (10) zwischen 8° und 15° beträgt, während die Reibflächen der Synchronringe (5, 6 und 7) einen Neigungswinkel von kleiner 8° aufweisen

## Claims

1. Synchronizing device, in particular for a variable-speed transmission of a motor vehicle, with at least three cooperating synchronizing rings (5, 6, 7) having conical friction surfaces, for providing synchronism between two shift elements (1, 2) to be connected positively to one another, an outer synchronizing ring (6) and an inner synchronizing ring (5) being connected essentially fixedly in terms of rotation to a first shift element (1), and a middle synchronizing ring (7) being connected essentially fixedly in terms of rotation to a second shift element (2), and the inner synchronizing ring (5) having an inner conical surface (8) which cooperates with the second shift element (2) and an outer friction surface (9) which cooperates with the inner friction surface of the middle synchronizing ring (7), and the outer friction surface of the middle synchronizing ring (7) cooperating with the inner friction surface of the outer synchronizing ring (6), **characterized in that** the inner conical surface (8) of the inner synchronizing ring (5) has a larger angle of inclination than its outer friction surface (9).

2. Synchronizing device according to Claim 1, **characterized in that** the contact surface formed between the inner conical surface (8) of the inner synchronizing ring (5) and a conical auxiliary ramp surface (10) of the second shift element (2) is designed as a sliding-friction surface.

3. Synchronizing device according to one of the preceding claims, **characterized in that** the middle synchronizing ring (7) is produced from a material having a predominant steel fraction.

4. Synchronizing device according to one of the preceding claims, **characterized in that** the middle synchronizing ring (7) is divided in the circumference.

5. Synchronizing device according to one of the preceding claims, **characterized in that** the axial distances from the inner synchronizing ring (5) and outer synchronizing ring (6) to the second shift element (2) are selected such that, when the synchronizing device experiences heating, the outer synchronizing ring (6) comes into contact with the second shift element (6) sooner than the inner synchronizing ring (5).

6. Synchronizing device according to one of the preceding claims, **characterized in that** the angle of inclination of the auxiliary ramp surface (10) amounts to between 8° and 15°, whilst the friction surfaces of the synchronizing rings (5, 6 and 7) have an angle of inclination of less than 8°.

## Revendications

1. Dispositif de synchronisation, notamment pour un engrenage à changement de vitesse d'un véhicule automobile, comprenant au moins trois bagues de synchronisation (5, 6, 7) agissant conjointement et présentant des surfaces de friction coniques pour établir une synchronisation entre deux éléments de changement de vitesse (1, 2) qui doivent être amenés l'un contre l'autre par engagement géométrique, une bague de synchronisation extérieure (6) et une bague de synchronisation intérieure (5) étant reliées avec un premier élément de changement de vitesse (1) essentiellement de manière à ne pas pouvoir tourner, et une bague de synchronisation centrale (7) étant reliée avec un deuxième élément de changement de vitesse (2) essentiellement de manière à ne pas pouvoir tourner, et la bague de synchronisation intérieure (5) présentant une surface conique intérieure (8) qui agit conjointement avec le deuxième élément de changement de vitesse (2) et une surface de friction extérieure (9) qui agit conjointement avec la surface de friction intérieure de la bague de synchronisation centrale (7), et la surface de friction extérieure de la bague de synchronisation centrale (7) agissant conjointement avec la surface de friction intérieure de la bague de synchronisation extérieure (6), **caractérisé en ce que** la surface conique intérieure (8) de la bague de synchronisation intérieure (5) présente un angle d'inclinaison supérieur à sa surface de friction extérieure (9).

2. Dispositif de synchronisation selon la revendication 1, **caractérisé en ce que** la surface de contact formée entre la surface conique intérieure (8) de la bague de synchronisation intérieure (5) et une surface de rampe auxiliaire conique (10) du deuxième élément de changement de vitesse (2) est réalisée sous la forme d'une surface de friction lisse.

3. Dispositif de synchronisation selon l'une des revendications précédentes, **caractérisé en ce que** la bague de synchronisation centrale (7) est fabriquée dans un matériau en majeure partie composé d'acier.

4. Dispositif de synchronisation selon l'une des revendications précédentes, **caractérisé en ce que** la bague de synchronisation centrale (7) est divisée sur son pourtour.

5. Dispositif de synchronisation selon l'une des revendications précédentes, **caractérisé en ce que** les écarts axiaux de la bague de synchronisation intérieure (5) et de la bague de synchronisation extérieure (6) par rapport au deuxième élément de changement de vitesse (2) sont choisis de telle sorte qu'en cas d'échauffement du dispositif de synchronisation, la bague de synchronisation extérieure (6) vient en contact avec le deuxième élément de changement de vitesse (6) plus tôt qu'avec la bague de synchronisation intérieure (5).

6. Dispositif de synchronisation selon l'une des revendications précédentes, **caractérisé en ce que** l'angle d'inclinaison de la surface de rampe auxiliaire (10) est compris entre 8° et 15°, alors que les surfaces de friction des bagues de synchronisation (5, 6 et 7) présentent un angle d'inclinaison inférieur à 8°.
